# EUROPÄISCHE PATENTANMELDUNG

(11) **EP 2 708 315 A1**
(43) Veröffentlichungstag der Anmeldung: **19.03.2014**
(21) Anmeldenummer: 12006557.8
(22) Anmeldetag: 18.09.2012
(51) Int. Cl.: B23Q 11/00, B23H 1/08

(54) **Verfahren und Vorrichtung zum Bearbeiten von Vertiefungen aufweisenden Werkstücken**

(71) Anmelder: Zimmer & Kreim GmbH & Co. KG, 64395 Brensbach (DE)
(72) Erfinder: Emert, Wolfgang, D-74206 Bad Wimpfen (DE)
(74) Vertreter: Lenz, Steffen

(57) **Zusammenfassung**

Verfahren und Bearbeitungsvorrichtung zum Bearbeiten von wenigstens eine Vertiefung aufweisenden Werkstücken mittels wenigstens einer Werkzeugmaschine mit- einer an einem Träger (9) gelagerten, gesteuert drehangetriebenen Pinole (6) mit einer Spanneinrichtung (8), welche zum lösbaren Festlegen wenigstens eines Werkzeugs an der Pinole (6) ausgebildet ist;- einem unterhalb der Pinole (6) angeordneten Arbeitstisch mit einer Werkstück-Spanneinrichtung zum lösbaren Festlegen eines zu bearbeitenden Werkstückes; und- einer Einrichtung zum zumindest teilweisen Benetzen des Werkstückes mit einem flüssigen Arbeitsmedium, indem das Werkstück der Werkzeugmaschine zugeführt und an der Werkstück-Spanneinrichtung des Arbeitstisches lösbar festgelegt wird, wonach das Werkstück zumindest bereichsweise mit der Arbeitsflüssigkeit benetzt und mittels eines an der Spanneinrichtung (8) der Pinole (6) gespannten Werkzeugs bearbeitet wird, wonach dasWerkzeug von der Spanneinrichtung (8) der Pinole (6) entnommen und abgeführt wird, dadurch gekennzeichnet, dass der Werkzeugmaschine einePumpe (15) zugeführt und eine Abtriebswelle (18; 18a) eines Förderelementes der Pumpe (15) drehfest mit der Pinole (6) verbunden wird, während ein die Abtriebswelle (18; 18a) lagerndes Pumpengehäuse (16) drehfest an dem Träger (9) der Pinole (6) arretiert wird, wonach die Pinole (6) in Rotation versetzt wird, um das hiermit über die Abtriebswelle (18; 18a) gekoppelte Förderelement der Pumpe (15) anzutreiben und in der wenigstens einen Vertiefung des Werkstückes zurückgebliebene Arbeitsflüssigkeit mittels der Pumpe (15) abzuführen.

## Beschreibung

Die Erfindung betrifft ein Verfahren zum Bearbeiten von wenigstens eine Vertiefung aufweisenden Werkstücken mittels wenigstens einer Werkzeugmaschine mit
- einer an einem Träger gelagerten, gesteuert drehangetriebenen Pinole mit einer Spanneinrichtung, welche zum lösbaren Festlegen wenigstens eines Werkzeugs an der Pinole ausgebildet ist;
- einem unterhalb der Pinole angeordneten Arbeitstisch mit einer Werkstück-Spanneinrichtung zum lösbaren Festlegen eines zu bearbeitenden Werkstückes; und
- einer Einrichtung zum zumindest teilweisen Benetzen des Werkstückes mit einem flüssigen Arbeitsmedium,
   indem das Werkstück der Werkzeugmaschine zugeführt und an der Werkstück-Spanneinrichtung des Arbeitstisches lösbar festgelegt wird, wonach das Werkstück zumindest bereichsweise mit der Arbeitsflüssigkeit benetzt und mittels eines an der Spanneinrichtung der Pinole gespannten Werkzeugs bearbeitet wird, wonach das Werkzeug von der Spanneinrichtung der Pinole entnommen und abgeführt wird. Die Erfindung bezieht sich ferner auf eine insbesondere zur Durchführung eines solchen Verfahrens geeignete Bearbeitungsvorrichtung mit einer Werkzeugmaschine der vorgenannten Art.

Werkzeugmaschinen der vorgenannten Art sind in Form von manuell, halb- und vollautomatisch betriebenen Maschinen in vielfältiger Ausgestaltung bekannt. Sofern spanabhebende Werkzeugmaschinen, wie beispielsweise Fräsmaschinen, Bohrmaschinen, Schleifmaschinen oder insbesondere Erodiermaschinen betroffen sind, beruht ihre Funktionsweise auf dem lokalen Materialabtrag der zu bearbeitenden Werkstücke, welche zumindest im Falle von Erodiermaschinen aus elektrisch leitenden Materialien gefertigt sind. Derartige Werkzeugmaschinen weisen üblicherweise eine an einem Träger gelagerten, gesteuert drehangetriebene Pinole mit einer Spanneinrichtung auf, an welcher ein Werkzeug, wie beispielsweise ein Fräs-, Bohr-, Schleifwerkzeug oder eine Erodierelektrode, lösbar festgelegt werden kann. Letztere ist in der Regel aus formstabilen Materialien mit hoher elektrischer Leitfähigkeit, insbesondere aus Graphit, Kupfer oder auch Wolfram gefertigt. Unterhalb der Pinole befindet sich ein Arbeitstisch mit einer Werkstück-Spanneinrichtung, welcher zum lösbaren Festlegen der zu bearbeitenden Werkstücke oder einer Palette, auf welcher das zu bearbeitende Werkstück festgelegt ist, dient.

Die Bearbeitung der Werkstücke erfolgt häufig unter zumindest teil- bzw. bereichsweiser Benetzung des Werkstückes mit einem flüssigen Arbeitsmedium, wobei die Werkzeugmaschine eine Einrichtung zum zumindest teilweisen Benetzen des Werkstückes mit dem flüssigen Arbeitsmedium aufweist, um dem Werkstück die Arbeitsflüssigkeit dort zuzuführen, wo die Bearbeitung erfolgt. Die Einrichtungen können hierbei Leitungen, wie Gelenkleitungen, umfassen, welche über eine Pumpe an ein Flüssigkeitsreservoir angeschlossen sind, in welchem die Arbeitsflüssigkeit auf Vorrat gehalten wird. Im Falle von Fräs-, Bohr- oder Schleifmaschinen kann es sich bei der Arbeitsflüssigkeit um Schmier- oder Kühlmedien handeln. Im Falle von Erodiermaschinen ist dem Arbeitstisch in der Regel ein Behälter zugeordnet, welcher zur Aufnahme einer Arbeitsflüssigkeit in Form eines flüssigen Dielektrikums dient und relativ in Bezug auf den Arbeitstisch höhenverlagerbar ist, um ein auf dem Arbeitstisch befindliches Werkstück anlässlich des Erodierens in das Dielektrikum tauchen zu können, so dass das Dielektrikum während des Erodiervorgangs den Zwischenraum zwischen der Erodierelektrode um dem Werkstück ausfüllt. Während des Erodiervorgangs wird zwischen dem Werkstück und der Erodierelektrode eine elektrische Spannung angelegt, so dass zwischen der Erodierelektrode und dem Werkstück ein Lichtbogen erzeugt wird, wodurch an lokalen Bereichen des Werkstückes, insbesondere durch Verdampfen des Werkstückmaterials, ein partieller Materialabtrag stattfindet, wonach die abgelösten Materialpartikel in das Dielektrikum gelangen. Die geometrischen Strukturen, mit welchen das Werkstück versehen werden soll, entsprechen der Form der individuell für ein jedes Werkstück gefertigten Erodierelektrode, welche folglich eine zu den zu erzeugenden Strukturen komplementäre Form besitzt.

Es sei an dieser Stelle darauf hingewiesen, dass mit "Werkstück-Spanneinrichtung" im Rahmen der vorliegenden Offenbarung nicht nur klassische Spanneinrichtungen angesprochen sind, sondern hierunter beliebige Einrichtungen zu verstehen sind, welche zum lösbaren Festlegen eines zu bearbeitenden Werkstückes auf einem Arbeitstisch dienen können. Exemplarisch seien neben herkömmlichen Spanneinrichtungen Klemmeinrichtungen, mittels welchen das zu bearbeitende Werkstück, z.B. mittels Pratzen, auf dem Arbeitstisch geklemmt werden kann, oder magnetische Halteeinrichtungen erwähnt, mittels welchen metallische Werkstücke stationär in Bezug auf den Arbeitstisch gehalten werden können, indem beispielsweise die Spule eines Elektromagneten mit einem Induktionsstrom beaufschlagt wird. Überdies ist es insbesondere bei relativ großen Werkstücken mit hoher Masse denkbar, diese lediglich in eine vorherbestimmten Position auf dem Arbeitstisch abzulegen.

Während Fräs-, Bohr- und Schleifmaschinen zur praktisch beliebigen Bearbeitung von Werkstücken verschiedenster Art einschließlich solcher mit einer oder mehreren Vertiefungen, wie beispielsweise Formwerkzeugen, zum Einsatz gelangen, finden Erodiermaschinen insbesondere zur Erzeugung von komplexen Oberflächenstrukturen in metallenen Werkstücken Verwendung, wobei hier ein Schwerpunkt in der Herstellung von Formwerkzeugen, wie beispielsweise Spritzgießformen, besteht, welche zumindest bereichsweise mit Strukturen versehen werden, welche später in komplementärer Form dem hiermit erzeugten Formteil verliehen werden sollen. Die zu bearbeitenden Werkstücke weisen daher häufig mehr oder minder große Vertiefungen auf, in welchen das Dielektrikum zurückbleibt, wenn das Formwerkzeug nach dem Erodiervorgang dem Dielektrikum entnommen wird, indem beispielsweise der das Dielektrikum aufnehmende Behälter von dem das fertig bearbeitete Werkstück tragenden Arbeitstisch fort nach unten verlagert wird (nachdem er vor der Bearbeitung des Werkstückes in die entgegengesetzte Richtung nach oben verlagert worden ist, bis das hierin befindliche Dielektrikum die zu erodierende Oberfläche des Werkstückes gänzlich benetzt hat). Dies stellt insoweit ein Problem dar, als das üblicherweise auf Basis von organischen Ölen mit diversen Additiven gebildete Dielektrikum gesundheitsschädlich und filmbildend ist, d.h. es besitzt eine starke Tendenz zur Benetzung von insbesondere metallischen Oberflächen, wobei das Dielektrikum zudem Kunststoffe chemisch angreift, so dass beispielsweise im Falle eines Kontaktes mit elektrischen oder fluidischen Leitungen ein erhebliches (Prozess)sicherheitsrisiko besteht. Ein Kontakt des Dielektrikums sowohl mit der menschlichen Haut (wie beispielsweise im Falle eines manuellen Betriebs der Erodiermaschine) als auch insbesondere mit Maschinenteilen gleich welcher Art einschließlich deren elektrischen/fluidischen Zu- und Ableitungen (wie z.B. im Falle eines halb- oder vollautomatischen Betriebs der Erodiermaschine) sollten daher jedenfalls vermieden werden. Folglich erweist es sich in handhabungs- bzw. manipulatorischer Hinsicht als aufwändig, das in den Vertiefungen des Werkstückes zurückbleibende Dielektrikum zu entfernen, was insbesondere - wenn auch nicht ausschließlich - für einen automatisierten Betrieb der Erodiermaschine unter Einsatz von Manipulatoren zur Bestückung derselben mit Werkstücken und/oder Erodierelektroden gilt, da bei jeder manipulatorischen Verlagerung des Werkstückes die Gefahr besteht, dass zumindest Teilmengen des Dielektrikum aus dem Werkstück austreten und auf die Oberflächen benachbarter Maschinenteile oder auch Werkstücke gelangen.

Entsprechendes gilt weitestgehend auch im Falle der Bearbeitung von Vertiefungen aufweisenden Werkstücken mittels andersartiger Werkzeugmaschinen, wie z.B. Fräs-, Bohr- oder auch Schleifmaschinen, unter Verwendung eines flüssigen Arbeitsmediums, wie bekannter Kühl- und/oder Schmiermittel, wobei sich die Arbeitsflüssigkeit nach Vollendung der Bearbeitung in der/den Vertiefung(en) des Werkstückes staut und manuell oder manipulatorisch möglichst kontaminationsfrei wieder abgeführt werden sollte.

Der Erfindung liegt die Aufgabe zugrunde, ein Verfahren und eine Bearbeitungsvorrichtung zum Bearbeiten von wenigstens eine Vertiefung aufweisenden Werkstücken der eingangs genannten Art dahingehend weiterzubilden, dass die in der Vertiefung des Werkstückes nach der Bearbeitung zurückbleibende Arbeitsflüssigkeit unter zuverlässiger Vermeidung einer Kontamination der Umgebung sicher aus der Vertiefung des Werkstückes abgeführt werden kann.

In verfahrenstechnischer Hinsicht wird diese Aufgabe erfindungsgemäß bei einem Verfahren der eingangs genannten Art dadurch gelöst, dass der Werkzeugmaschine eine Pumpe zugeführt und eine Abtriebswelle eines Förderelementes der Pumpe drehfest mit der Pinole verbunden wird, während ein die Abtriebswelle lagerndes Pumpengehäuse drehfest an dem Träger der Pinole arretiert wird, wonach die Pinole in Rotation versetzt wird, um das hiermit über die Abtriebswelle gekoppelte Förderelement der Pumpe anzutreiben und in der wenigstens einen Vertiefung des Werkstückes zurückgebliebene Arbeitsflüssigkeit mittels der Pumpe abzuführen.

In vorrichtungstechnischer Hinsicht sieht die Erfindung zur Lösung dieser Aufgabe bei einer Bearbeitungsvorrichtung mit wenigstens eine Werkzeugmaschine der eingangs genannten Art überdies vor, dass die Bearbeitungsvorrichtung ferner eine Pumpe mit einer in einem Pumpengehäuse gelagerten Abtriebswelle eines Förderelementes umfasst, wobei die Abtriebswelle des Förderelementes der Pumpe drehfest mit der Pinole der Werkzeugmaschine verbindbar und das Pumpengehäuse drehfest an dem Träger der Pinole der Werkzeugmaschine arretierbar ist, um das mit der Pinole der Werkzeugmaschine über die Abtriebswelle gekoppelte Förderelement der Pumpe anzutreiben.

Die erfindungsgemäße Ausgestaltung ermöglicht aufgrund der an die Werkzeugmaschine selbst anschließbaren Pumpe eine Abfuhr der Arbeitsflüssigkeit, wie beispielsweise eines Kühl- und/oder Schmiermittels oder eines Dielektrikums, aus der/den Vertiefung(en) des noch auf dem Arbeitstisch der Werkzeugmaschine befindlichen Werkstückes, so dass keine manuellen oder manipulatorischen Verlagerungen des Werkstückes vor der Abfuhr der zurückgebliebenen Arbeitsflüssigkeit erforderlich sind und letztere folglich nicht Gefahr läuft, in die Maschinenumgebung oder mit dem Bedienpersonal in Kontakt zu gelangen. Die Erfindung nutzt dabei den ohnehin vorhandenen, gesteuerten Drehantrieb der Pinole der Werkzeugmaschine zum Antrieb der im Übrigen passiven bzw. nicht mit einem eigenen Antrieb versehenen Pumpe, indem die Abtriebswelle deren Förderelementes drehfest mit der Pinole verbunden wird, während ihr die Abtriebswelle lagerndes Pumpengehäuse drehfest an dem - gleichfalls drehfest in Bezug auf die Pinole angeordneten - Träger der Pinole der Werkzeugmaschine arretiert wird, so dass die Rotation der Pinole auf die Abtriebswelle des Förderelementes des Pumpe übertragen wird, während das Pumpengehäuse demgegenüber nicht drehbar an dem Träger der Pinole arretiert ist. Die an die Werkzeugmaschine derart angeschlossene Pumpe lässt sich demnach mittels des gesteuerten Drehantriebs der Pinole der Werkzeugmaschine in Betrieb setzen, wobei die gewünschte Pumpenleistung durch entsprechende Steuerung des Drehantriebs der Pinole gemäß den jeweiligen Erfordernissen variiert werden kann.

Wie bereits erwähnt, bietet sich die Erfindung insbesondere - wenn auch nicht ausschließlich - für Werkzeugmaschinen in Form von Fräs-, Bohr- oder Schleifmaschinen an, wobei sie sich in besonderem Maße für Erodiermaschinen eignet, wo das Werkstück anlässlich des Erodiervorgangs üblicherweise gänzlich in das zumeist chemisch nicht unproblematische Dielektrikum getaucht wird, so dass sehr große Mengen an Dielektrikum in der/den Vertiefung(en) des Werkstückes zurückbleiben und diese, nachdem das Werkstück dem Dielektrikum entnommen worden ist, mehr oder minder vollständig befüllt.

Aus diesem Grund sieht eine bevorzugte Ausgestaltung des erfindungsgemäßen Verfahrens vor, dass es sich bei der Werkzeugmaschine um eine Erodiermaschine handelt mit
- einer an einem Träger gelagerten, gesteuert drehangetriebenen Pinole mit einer Spanneinrichtung, welche zum lösbaren Festlegen wenigstens eines Werkzeugs in Form einer Erodierelektrode an der Pinole ausgebildet ist;
- einem unterhalb der Pinole angeordneten Arbeitstisch mit einer Werkstück-Spanneinrichtung zum lösbaren Festlegen eines zu bearbeitenden Werkstückes; und
- einer Einrichtung zum zumindest teilweisen Benetzen des Werkstückes mit einem flüssigen Arbeitsmedium in Form eines dem Arbeitstisch zugeordneten Behälters zur Aufnahme des Arbeitsmediums in Form eines flüssigen Dielektrikums, wobei der Behälter relativ zu dem Arbeitstisch verlagerbar ist, um ein an der Werkstück-Spanneinrichtung festgelegtes Werkstück anlässlich des Erodierens in das Dielektrikum zu tauchen,
   indem das Werkstück der Erodiermaschine zugeführt und an der Werkstück-Spanneinrichtung des Arbeitstisches lösbar festgelegt wird, wonach der das Dielektrikum aufnehmende Behälter und der Arbeitstisch mit dem Werkstück relativ zueinander verlagert werden, um das Werkstück in das Dielektrikum zu tauchen, wonach das Werkstück mittels einer an der Spanneinrichtung der Pinole gespannten Erodierelektrode erodiert wird, wonach der das Dielektrikum aufnehmende Behälter und der Arbeitstisch entgegengesetzt relativ zueinander verlagert werden, um das Werkstück dem Dielektrikum zu entnehmen, und die Erodierelektrode von der Spanneinrichtung der Pinole entnommen und abgeführt wird. Wie oben erwähnt, wird der Erodiermaschine erfindungsgemäß sodann die Pumpe zugeführt und wird die Abtriebswelle des Förderelementes der Pumpe drehfest mit der Pinole verbunden, während das die Abtriebswelle lagernde Pumpengehäuse drehfest an dem Träger der Pinole arretiert wird, wonach die Pinole in Rotation versetzt wird, um das hiermit über die Abtriebswelle gekoppelte Förderelement der Pumpe anzutreiben und in der wenigstens einen Vertiefung des Werkstückes zurückgebliebenes Dielektrikum mittels der Pumpe abzuführen. Eine vorteilhafte Ausgestaltung einer erfindungsgemäßen Bearbeitungsvorrichtung zeichnet sich folglich dadurch aus, dass es sich bei der Werkzeugmaschine um eine Erodiermaschine handelt mit
- einer an einem Träger gelagerten, gesteuert drehangetriebenen Pinole mit einer Spanneinrichtung , welche zum lösbaren Festlegen wenigstens eines Werkzeugs in Form einer Erodierelektrode an der Pinole ausgebildet ist;
- einem unterhalb der Pinole angeordneten Arbeitstisch mit einer Werkstück-Spanneinrichtung zum lösbaren Festlegen eines zu bearbeitenden Werkstückes; und
- einer Einrichtung zum zumindest teilweisen Benetzen des Werkstückes mit einem flüssigen Arbeitsmedium in Form eines dem Arbeitstisch zugeordneten Behälters zur Aufnahme des Arbeitsmediums in Form eines flüssigen Dielektrikums,
   wobei der Behälter relativ zu dem Arbeitstisch verlagerbar ist, um ein an der Werkstück-Spanneinrichtung festgelegtes Werkstück anlässlich des Erodierens in das Dielektrikum zu tauchen,
wobei die Bearbeitungsvorrichtung ferner die Pumpe mit der in einem Pumpengehäuse gelagerten Abtriebswelle des Förderelementes umfasst, wobei die Abtriebswelle des Förderelementes der Pumpe drehfest mit der Pinole der Erodiermaschine verbindbar und das Pumpengehäuse drehfest an dem Träger der Pinole der Erodiermaschine arretierbar ist, um das mit der Pinole der Erodiermaschine über die Abtriebswelle gekoppelte Förderelement der Pumpe anzutreiben.

Zur lösbaren Befestigung der Pumpe an der Werkzeugmaschine ist die Pumpe zweckmäßig mit einer Spanneinrichtung ausgestattet, welche an einer hierzu komplementären Spanneinrichtung der Werkzeugmaschine lösbar befestigt werden kann. Eine vorteilhafte Ausgestaltung des erfindungsgemäßen Verfahrens sieht in diesem Zusammenhang vor, dass zur lösbaren Befestigung der Pumpe an der Werkzeugmaschine eine drehfest mit der Abtriebswelle der Pumpe verbundene Spanneinrichtung an der hierzu komplementären Spanneinrichtung der Pinole der Werkzeugmaschine lösbar festgelegt wird. Die Pumpe kann folglich vorzugsweise über ihre Abtriebswelle an der Werkzeugmaschine gespannt werden, wobei die Spanneinrichtung der Pumpe insbesondere im Wesentlichen entsprechend den Spanneinrichtungen der jeweiligen Werkzeuge der Werkzeugmaschine, wie z.B. entsprechend den Spanneinrichtungen der Fräs-, Bohr- oder Schleifwerkzeuge oder der Erodierelektroden etc., ausgebildet sein kann, welche an der Spanneinrichtung der Pinole der Werkzeugmaschine spannbar sind. Demnach kann erfindungsgemäß auch die ohnehin vorhandene Spanneinrichtung der Werkzeugmaschine zum lösbaren Festlegen der Pumpe genutzt werden und sind zusätzliche Spanneinrichtungen der Werkzeugmaschine entbehrlich. Eine erfindungsgemäße Bearbeitungsvorrichtung zeichnet sich folglich bevorzugt dadurch aus, dass die Pumpe zur lösbaren Befestigung an der Werkzeugmaschine eine drehfest mit ihrer Abtriebswelle verbundene Spanneinrichtung aufweist, welche zu der Spanneinrichtung der Pinole der Werkzeugmaschine komplementär ist.

Die über die Abführleitung abgeführte Arbeitsflüssigkeit kann vorzugsweise mittels eines der Werkzeugmaschine zugeordneten Filters gefiltert und insbesondere in einen Behälter, wie ein Flüssigkeitsreservoir zur Bevorratung der Arbeitsflüssigkeit, rezirkuliert werden, so dass eine Wiederverwendung der Arbeitsflüssigkeit möglich ist. Demgegenüber kann die Arbeitsflüssigkeit freilich auch - sofern gewünscht - nach dem Entfernen aus dem bearbeiteten Werkstück verworfen werden. Darüber hinaus kann insbesondere im Falle von Erodiermaschinen das aus der/den Vertiefung(en) des Werkstückes abgeführte Dielektrikum mittels der an die Erodiermaschine angeschlossenen Pumpe z.B. in den das Dielektrikum aufnehmenden Behälter zurück gepumpt werden, wobei - wie oben angedeutet - in diesem Fall vorzugsweise vorgesehen sein kann, dass ein Ablauf der Pumpe an eine an dem Träger der Pinole der Erodiermaschine mündende Abführleitung angeschlossen wird und das Dielektrikum über die Abführleitung abgeführt wird. Das über die Abführleitung abgeführte Dielektrikum kann dann wiederum mittels eines der Erodiermaschine zugeordneten Filters gefiltert und insbesondere in den Behälter rezirkuliert werden. Entsprechend kann selbstverständlich auch das in dem Behälter befindliche Dielektrikum mittels desselben oder eines weiteren Filters gefiltert und insbesondere gleichfalls in den Behälter rezirkuliert werden, um das Dielektrikum von anlässlich des Erodiervorgangs in das Dielektrikum gelangten Partikel des Werkstückmaterials zu befreien. Gemäß einer Weiterbildung einer erfindungsgemäßen Bearbeitungsvorrichtung kann zu diesem Zweck folglich vorgesehen sein, dass die Pumpe einen Ablauf aufweist, welcher an eine an dem Träger der Pinole der Werkzeugmaschine mündende Abführleitung anschließbar ist. Der Werkzeugmaschine kann in diesem Fall ferner ein Filter zugeordnet sein, in welche die Abführleitung mündet, wobei sich an das Filter insbesondere eine in einen Behälter, wie z.B. in den das Dielektrikum aufnehmenden Behälter einer Erodiermaschine, mündende Rezirkulationsleitung anschließen kann.

Sofern der Träger der Pinole der Werkzeugmaschine mit einer solchen, dort mündenden Abführleitung ausgestattet ist, kann diese zweckmäßig unter radialem Abstand in Bezug auf die Pinole angeordnet sein, während der Ablauf der Pumpe unter einem entsprechenden radialen Abstand von der Abtriebswelle ihres Förderelementes angeordnet sein kann, wobei das Pumpengehäuse beim Anschließen seines Ablaufes an die Abführleitung der Werkzeugmaschine zugleich drehfest an dem Träger arretiert wird. Auf diese Weise wird das Pumpengehäuse durch Anschließen seines Ablaufes an die Abführleitung der Werkzeugmaschine zugleich drehfest an dem - seinerseits drehfest in Bezug auf die Pinole angeordneten - Pinolenträger arretiert, um für die erforderliche Drehung der mit der Pinole gekoppelten Abtriebswelle der Pumpe relativ zu dem Pumpengehäuse während des Betriebs der Pumpe zu sorgen. Bei einer hierzu geeigneten Bearbeitungsvorrichtung kann folglich vorzugsweise vorgesehen sein, dass die an dem Träger der Pinole der Werkzeugmaschine mündende Abführleitung unter radialem Abstand in Bezug auf die Pinole und der Ablauf der Pumpe unter einem entsprechenden radialen Abstand von der Abtriebswelle ihres Förderelementes angeordnet ist, wobei der Ablauf des Pumpengehäuses und die Mündung der Abführleitung formschlüssig aneinander arretierbar sind, um das Pumpengehäuse drehfest an dem Träger zu arretieren.

Um für eine möglichst gänzliche Abfuhr der in der/den Vertiefung(en) des bearbeiteten Werkstückes zurückgebliebenen Arbeitsflüssigkeit zu sorgen, kann an einen Zulauf der Pumpe beispielsweise eine Gelenkleitung angeschlossen werden, deren Erstreckungsverlauf und deren Länge derart an die jeweilige Werkstückgeometrie angepasst wird, dass das freie Ende der Gelenkleitung anlässlich des Abführens von in der wenigstens einen Vertiefung des Werkstückes zurückgebliebener Arbeitsflüssigkeit mittels der an der Werkzeugmaschine festgelegten Pumpe bis in den Bereich des Bodens der wenigstens einen Vertiefung des Werkstückes reicht. Derartige Gelenkleitungen, wie sie an einen Zulauf der Pumpe angeschlossen sein können, sind beispielsweise in Form von Kühl- und Schmiermittelleitungen von Werkzeugmaschinen bekannt und weisen mehrere, beispielsweise über Kugelgelenke gelenkig miteinander verbundene Leitungselemente auf.

Wie bereits angedeutet, kann die Werkzeugmaschine mehr oder minder manuell betrieben werden, wobei es die Erfindung jedoch insbesondere auch möglich macht, dass das Werkstück in halb- oder vollautomatisierter Weise bearbeitet und von in dessen wenigstens einen Vertiefung zurückgebliebener Arbeitsflüssigkeit befreit wird, indem beispielsweise sowohl das Werkstück als auch die Pumpe mittels eines gesteuert angetriebenen Manipulators der Werkzeugmaschine zu- und abgeführt und an der Werkstück-Spanneinrichtung der Werkzeugmaschine bzw. an deren Spanneinrichtung zum lösbaren Festlegen des jeweiligen Werkzeugs gespannt und hiervon gelöst wird. Entsprechendes kann freilich hinsichtlich des Bestückens der Werkzeugmaschine mit Werkstücken gelten. Eine erfindungsgemäße Bearbeitungsvorrichtung kann folglich wenigstens einen, mehrere Freiheitsgrade aufweisenden und gesteuert angetriebenen Manipulator umfassen, welcher zum automatisierten Transfer der Werkstücke, der Werkzeuge und der Pumpe zwischen der bzw. den Werkzeugmaschine(n) und Materiallagern bzw. -magazinen sowie ferner zum Festlegen/Lösen der Werkstücke, der Werkzeuge und der Pumpe an der bzw. von der Werkzeugmaschine dienen kann.

Die Pumpe kann beispielsweise nach Art einer Kreiselpumpe ausgebildet sein und das Förderelement der Pumpe folglich ein in dem Pumpengehäuse gelagertes Pumpenrad aufweisen, welches insbesondere über ein Getriebe, z.B. ein Planetengetriebe, mit der Abtriebswelle in Verbindung steht.

Die Erfindung betrifft schließlich auch eine Pumpe einer Bearbeitungsvorrichtung der vorgenannten Art, wobei die Pumpe eine in einem Pumpengehäuse gelagerte Abtriebswelle eines Förderelementes umfasst, wobei die Abtriebswelle des Förderelementes der Pumpe drehfest mit der Pinole der Werkzeugmaschine verbindbar und das Pumpengehäuse drehfest an dem Träger der Pinole der Werkzeugmaschine arretierbar ist, um das mit der Pinole der Werkzeugmaschine über die Abtriebswelle gekoppelte Förderelement der Pumpe anzutreiben. In Bezug auf vorteilhafte Ausgestaltungen der Pumpe, welche insbesondere antriebslos ausgebildet ist, sei auf die obigen Ausführungen verwiesen.

Weitere Merkmale und Vorteile der Erfindung ergeben sich aus der nachfolgenden Beschreibung einer exemplarischen Ausführungsform unter Bezugnahme auf die Zeichnungen. Dabei zeigen:
- Fig. 1: eine schematische perspektivische Ansicht eines Ausführungsbeispiels einer vollautomatisiert betriebenen Bearbeitungsvorrichtung, welche im vorliegenden Fall zwei Werkzeugmaschinen in Form von Erodiermaschinen, einen Manipulator und ein Lager in Form eines Magazins umfasst;
- Fig. 2: eine schematische perspektivische Schnittansicht einer an einem Träger gelagerten, gesteuert drehangetriebenen Pinole einer jeweiligen Erodiermaschine der Vorrichtung gemäß Fig. 1 mit einer hieran angeschlossenen Pumpe;
- Fig. 3: eine schematische perspektivische Ansicht einer gegenüber der Fig. 2 abgewandelten Ausführungsform einer Pumpe, welche an eine jeweilige Erodiermaschine gemäß Fig. 1 und 2 anschließbar ist;
- Fig. 4: eine schematische Seitenansicht der Pumpe gemäß Fig. 3; und
- Fig. 5: eine schematische Schnittansicht der Pumpe gemäß Fig. 3 und 4 entlang der Schnittebene A-A der Fig. 4.

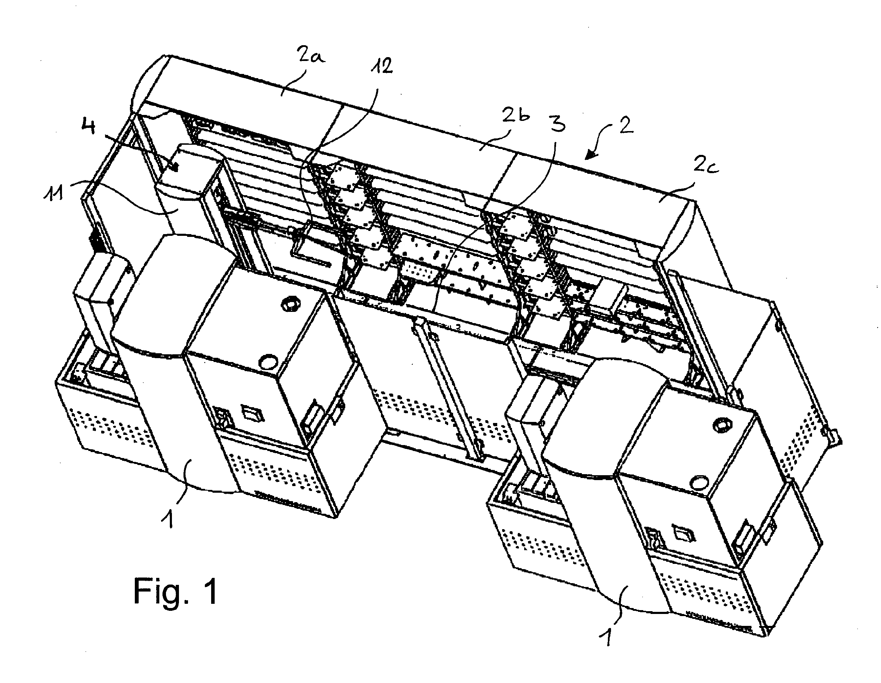

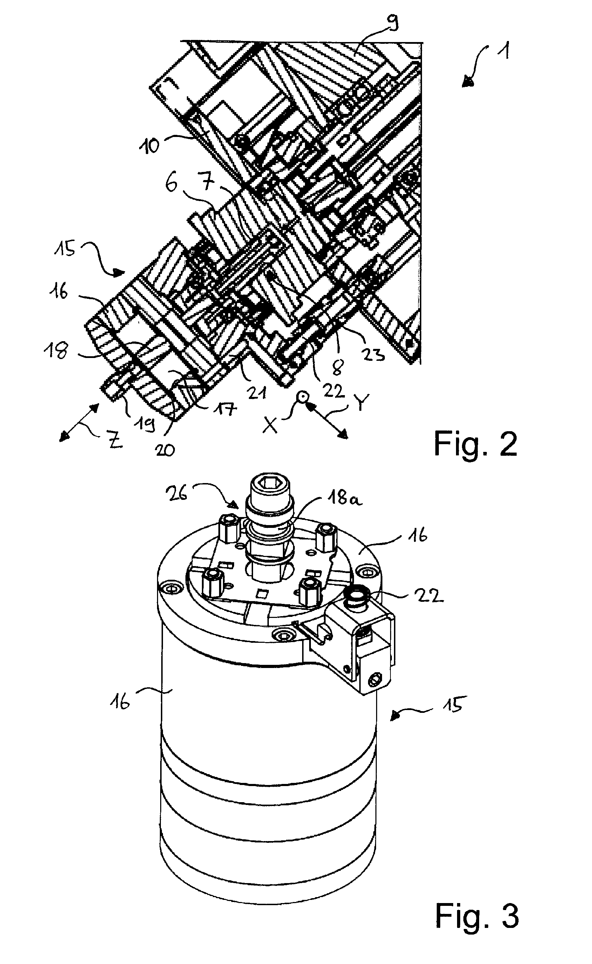

In Fig. 1. ist eine vollautomatisierte Bearbeitungsvorrichtung - hier in Form einer Erodiervorrichtung - exemplarisch wiedergegeben, welche beim vorliegenden Ausführungsbeispiel zwei Erodiermaschinen 1, insbesondere in Form von Senkerodiermaschinen, ein in mehrere Abteilungen 2a, 2b, 2c unterteiltes Lager oder Magazin 2 zur Bevorratung der zu bearbeitenden Werkstücke, der Erodierelektroden sowie der weiter unten unter Bezugnahme auf Fig. 2 bis 4 näher erläuterten Pumpe(n) sowie einen beispielsweise linear entlang Schienen 3 verfahrbaren Manipulator 4 umfasst. Es sei darauf hingewiesen, dass die Bearbeitungsvorrichtung alternativ oder zusätzlich zu einer oder beiden Erodiermaschinen 1 eine oder mehrere andere Werkzeugmaschine(n), insbesondere aus der Gruppe Fräs-, Bohr- und/oder Schleifmaschinen, umfassen kann, welche zur spanabhebenden Bearbeitung von Werkstücken unter Verwendung eines flüssigen Arbeitsmediums dienen.

Wie aus Fig. 2 ersichtlich, weisen die im Übrigen nicht im Detail wiedergegebenen Erodiermaschinen 1 je eine gesteuert drehangetriebene und unter elektrische Spannung setzbare Pinole 6 in Form eines mit einer zentralen Bohrung 7 versehenen Wellenstummels auf, wobei im Innern der Bohrung 7 eine nicht im Detail erkennbare Spanneinrichtung 8 angeordnet ist, welche üblichen Aufbaus sein kann und zum Einspannen der Erodierelektroden (nicht gezeigt) dient, so dass letztere sowohl axialfest als auch drehfest, aber lösbar an der Pinole 6 festgelegt werden können. Die Pinole 6 ist an einem Träger 9 der Erodiermaschine, beispielsweise mittels Kugellagern, gelagert, wobei der Träger 9 an seinem der Pinole 6 zugewandten Ende üblicherweise eine Isolierplatte 10 umfasst, um für die notwendige elektrische Isolation einer unter elektrische Spannung gesetzten, an der Pinole 6 gespannten Erodierelektrode (nicht gezeigt) gegenüber dem Träger 9 zu sorgen. Der Träger 9 ist ferner in der Vertikalen z, also koaxial zur Pinolenachse, gesteuert verfahrbar und kann überdies in einer horizontalen, senkrecht zur Pinolenachse angeordneten Ebene in x- und y-Richtung dieser Ebene gesteuert verfahrbar sein. Alternativ ist ein Arbeitstisch mit einer Werkstück-Spanneinrichtung in entsprechender Weise relativ zu der Pinolenachse in einer horizontalen Ebene gesteuert verfahrbar (vgl. die Pfeile X und Y bzw. Z der Fig. 2). Die in Fig. 1 schematisch dargestellten Erodiermaschinen 1 umfassen des Weiteren - wie als solches bekannt - neben dem vorgenannten, unterhalb der Pinole 6 angeordneten Arbeitstisch mit der Werkstück-Spanneinrichtung, welche zum lösbaren Festlegen eines zu erodierenden Werkstückes oder einer ein solches aufnehmenden Palette dient, einen dem Arbeitstisch zugeordneten Behälter zur Aufnahme eines flüssigen Dielektrikums, wobei der Behälter relativ zu dem Arbeitstisch höhenverlagerbar ist, um ein mittels des Werkstück-Spanneinrichtung auf dem Arbeitstisch gespanntes Werkstück vor dem Erodieren in das Dielektrikum zu tauchen und nach dem Erodieren dem Dielektrikum wieder zu entnehmen (jeweils nicht gezeigt). Sofern das Werkstück Vertiefungen aufweist, welche beispielsweise im Falle von Werkstücken in Form von Formwerkzeugen erhebliche Volumina aufweisen können, verbleiben beim Entnehmen des Werkstückes aus dem Dielektrikum, wenn beispielsweise der Behälter mit dem Dielektrikum in Bezug auf den stationären Arbeitstisch nach unten verfahren wird, erhebliche Mengen an Dielektrikum in dem Werkstück zurück, welche es gilt, möglichst kontaminationsfrei aus diesem abzuführen.

Wie weiterhin der Fig. 1 zu entnehmen ist, weist der Manipulator 4 im vorliegenden Fall vier Freiheitsgrade auf, wobei er entlang der Schienen 3 translatorisch verfahrbar (erster Freiheitsgrad) und ein Turm 11 des Manipulators um eine vertikale Achse rotatorisch schwenkbar ist (zweiter Freiheitsgrad). Ein Greifer 12 des Manipulators 4 ist darüber hinaus sowohl vertikal in Erstreckungsrichtung des Turmes 11 (dritter Freiheitsgrad) als auch horizontal von dem Turm 11 fort und zu diesem hin translatorisch verfahrbar (vierter Freiheitsgrad). Selbstverständlich sind auch andersartige Manipulatoren denkbar. Die Erodiermaschinen 1 sowie das Magazin 2 sind derart relativ zu dem schienengebundenen Manipulator 4 angeordnet, dass sie sich jeweils in der Reichweite des Greifers 12 des Manipulators 4 befinden. Geeignete Sensoren sorgen in Verbindung mit einer zentralen Prozesssteuerung für einen vollautomatisierten Betrieb.

Wie aus Fig. 2 ersichtlich, ist die Pinole 6 der Erodiermaschine 1 dort mit einer insgesamt mit dem Bezugszeichen 15 versehenen Pumpe bestückt worden, welche zum Abführen von in Vertiefungen eine erodierten Werkstückes zurückgebliebenem Dielektrikum dient. Die Pumpe 15 ist im vorliegenden Fall nach Art einer Kreiselpumpe ausgebildet und weist ein mit einem Förderelement in Form eines Pumpenrades (nicht gezeigt), welches auf einer in einem Pumpengehäuse 16 gelagerten Welle 18 sitzt, versehene Pumpenkammer 17 auf. Die das Pumpenrad tragende Welle 18 dient bei der Ausführungsform gemäß Fig. 2 zugleich als Abtriebswelle des Pumpenrades und ist an ihrem einem Zulauf 19 der Pumpe 15 entgegengesetzten, der Pinole 6 zugewandten Ende, welches das Pumpengehäuse 16 nach außen durchsetzt, mit einer zu der Spanneinrichtung 8 der Pinole 8 komplementären Spanneinrichtung (siehe Fig. 3 bis 5) ausgestattet, um die Abtriebswelle 18 axial- und drehfest, aber lösbar an der Pinole 8 zu spannen, wobei eine Drehbewegung der Pinole 9 auf die Abtriebswelle 18 der Pumpe 15 übertragen und das Pumpenrad somit angetrieben wird. Die Pumpe 15 ist im Übrigen antriebslos, d.h. sie weist keinen separaten, eigenen Antrieb auf, um das Pumpenrad in Rotation zu versetzen.

Der am unteren, der Pinole 6 abgewandten Ende des Pumpengehäuses 16 angeordnete Zulauf 19 mündet in die Pumpenkammer 17 ein, welche über eine im radialen Umfangsbereich der Pumpenkammer 17 angeordnete Austrittsöffnung 20 und eine das Pumpengehäuse 16 in Axialrichtung durchsetzende Ableitung 21 mit einem Ablauf 22 der Pumpe 15 in Verbindung steht, welcher unter radialem Abstand von der Abtriebswelle 18 angeordnet ist. Wie aus Fig. 2 ersichtlich, ist dieser Ablauf 22 der Pumpe 15 an eine Abführleitung 23 der Erodiermaschine 1 angeschlossen, welche an der der Pinole 6 zugewandten Stirnseite des Trägers 9 - oder genauer: dessen Isolierplatte 10 - mündet und deren radialer Abstand von der Pinolenachse dem radialen Abstand der Abtriebswelle 18 der Pumpe 15 von deren Ablauf 22 entspricht. Der Ablauf 22 des Pumpengehäuses 16 ist, wenn die Pumpe 15 über ihre an der Abtriebswelle 18 angeordnete Spanneinrichtung an der Spanneinrichtung 8 der Pinole 6 gespannt worden ist, insbesondere formschlüssig an der Abführleitung 23 des Trägers 9 der Erodiermaschine arretiert, so dass das Pumpengehäuse 16 allein durch den Anschluss seines Ablaufes 22 an die Abführleitung 23 drehfest an dem gleichfalls drehfest angeordneten Träger 9 der Erodiermaschine arretiert ist, während das Pumpenrad über seine an der drehangetriebenen Pinole 6 gespannte Abtriebswelle 18 durch Drehen der Pinole 6 in Bezug auf das Pumpengehäuse 16 in Rotation versetzt werden kann, um die Pumpe anzutreiben. An den Zulauf 19 des Pumpengehäuses 16 kann ferner eine (nicht dargestellte) Gelenkleitung angeschlossen sein, um den Zulauf 19 mit dem Boden der Vertiefung eines leer zu pumpenden, fertig erodierten Werkstückes, welches sich unter einem vorherbestimmten Abstand unterhalb der an der Pinole 6 gespannten Pumpe 15 befindet, zu verbinden.

Die Abführleitung 23 der Erodiermaschine 1 kann beispielsweise an eine Filtereinheit angeschlossen sein, um das aus dem Werkstück abgepumpte Dielektrikum von abgetragenen Werkstückpartikeln zu reinigen und das gereinigte Dielektrikum insbesondere in den Behälter zur Aufnahme desselben zu rezirkulieren (nicht gezeigt).

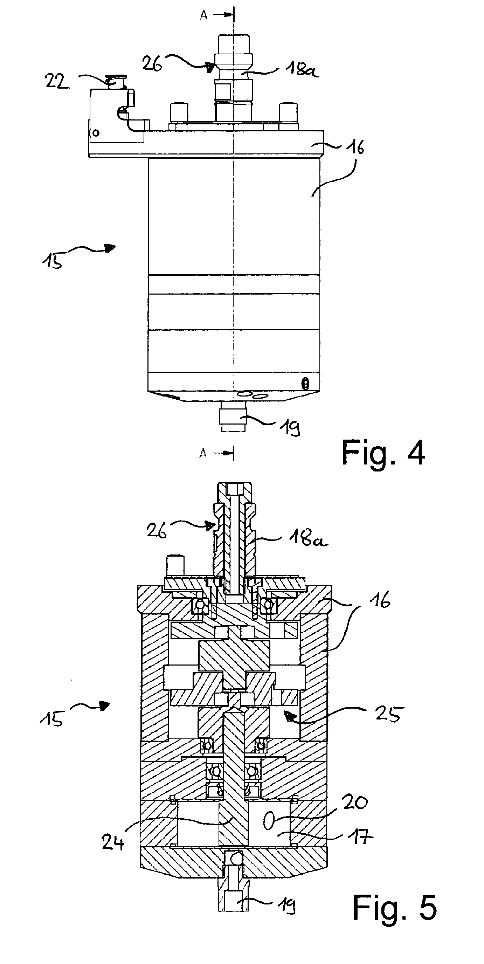

In Fig. 3 bis 5 ist eine alternative Ausgestaltung einer gleichfalls an der Pinole 6 der Erodiermaschine 1 gemäß Fig. 1 und 2 spannbaren Pumpe 15 wiedergegeben, wobei funktionsgleiche Bauteile mit denselben Bezugzeichen versehen sind. Die Pumpe gemäß Fig. 3 bis 5 unterscheidet sich von der in Fig. 2 gezeigten Ausführungsform vornehmlich dadurch, dass zwischen der Abtriebswelle 18a ihres - wiederum beispielsweise in Form eines Pumpenrades (nicht gezeigt) ausgebildeten - Förderelementes und einer weiteren, das in der Pumpenkammer 17 befindliche Pumpenrad tragenden Welle 24 ein Getriebe 25 zwischengeschaltet ist, welches beispielsweise als Planetengetriebe mit einem oder mehreren Sonnenrädern, welche(s) mit Planetenrädern kämmt/kämmen, ausgestattet ist und zur Übersetzung der Drehbewegung der Pinole 6 in eine demgegenüber insbesondere schnellere Drehbewegung der das Pumpenrad tragenden Welle 24 dient (vgl. Fig. 5). In den Fig. 3 bis 5 ist ferner die zu der Spanneinrichtung 8 der Pinole 6 (Fig. 2) komplementäre Spanneinrichtung 26 der Abtriebswelle 18a der Pumpe 15 erkennbar. Letztere entspricht insbesondere weitestgehend den Spanneinrichtungen der für die Erodiermaschine vorgesehenen Erodierelektroden (nicht gezeigt), welche ebenso wie die Pumpe(n) 15 in dem Magazin 2 auf Vorrat gehalten und mittels des Manipulators 4 in vollautomatisierter Weise von dem Magazin 2 einer jeweiligen Erodiermaschine 1 zugeführt, dort gespannt sowie - nachdem die Pumpe 15 den ihr zugedachten Dienst verrichtet hat - von der jeweiligen Erodiermaschine 1 gelöst und im Magazin 2 abgelegt werden können.

## Patentansprüche

1. Verfahren zum Bearbeiten von wenigstens eine Vertiefung aufweisenden Werkstücken mittels wenigstens einer Werkzeugmaschine mit
- einer an einem Träger (9) gelagerten, gesteuert drehangetriebenen Pinole (6) mit einer Spanneinrichtung (8), welche zum lösbaren Festlegen wenigstens eines Werkzeugs an der Pinole (6) ausgebildet ist;
- einem unterhalb der Pinole (6) angeordneten Arbeitstisch mit einer Werkstück-Spanneinrichtung zum lösbaren Festlegen eines zu bearbeitenden Werkstückes; und
- einer Einrichtung zum zumindest teilweisen Benetzen des Werkstückes mit einem flüssigen Arbeitsmedium,
indem das Werkstück der Werkzeugmaschine zugeführt und an der Werkstück-Spanneinrichtung des Arbeitstisches lösbar festgelegt wird, wonach das Werkstück zumindest bereichsweise mit der Arbeitsflüssigkeit benetzt und mittels eines an der Spanneinrichtung (8) der Pinole (6) gespannten Werkzeugs bearbeitet wird, wonach das Werkzeug von der Spanneinrichtung (8) der Pinole (6) entnommen und abgeführt wird,
**dadurch gekennzeichnet, dass** der Werkzeugmaschine eine Pumpe (15) zugeführt und eine Abtriebswelle (18; 18a) eines Förderelementes der Pumpe (15) drehfest mit der Pinole (6) verbunden wird, während ein die Abtriebswelle (18; 18a) lagerndes Pumpengehäuse (16) drehfest an dem Träger (9) der Pinole (6) arretiert wird, wonach die Pinole (6) in Rotation versetzt wird, um das hiermit über die Abtriebswelle (18; 18a) gekoppelte Förderelement der Pumpe (15) anzutreiben und in der wenigstens einen Vertiefung des Werkstückes zurückgebliebene Arbeitsflüssigkeit mittels der Pumpe (15) abzuführen.

2. Verfahren nach Anspruch 1, **dadurch gekennzeichnet, dass** es sich bei der Werkzeugmaschine um eine Erodiermaschine (1) handelt mit
- einer an einem Träger (9) gelagerten, gesteuert drehangetriebenen Pinole (6) mit einer Spanneinrichtung (8), welche zum lösbaren Festlegen wenigstens eines Werkzeugs in Form einer Erodierelektrode an der Pinole (6) ausgebildet ist;
- einem unterhalb der Pinole (6) angeordneten Arbeitstisch mit einer Werkstück-Spanneinrichtung zum lösbaren Festlegen eines zu bearbeitenden Werkstückes; und
- einer Einrichtung zum zumindest teilweisen Benetzen des Werkstückes mit einem flüssigen Arbeitsmedium in Form eines dem Arbeitstisch zugeordneten Behälters zur Aufnahme des Arbeitsmediums in Form eines flüssigen Dielektrikums, wobei der Behälter relativ zu dem Arbeitstisch verlagerbar ist, um ein an der Werkstück-Spanneinrichtung festgelegtes Werkstück anlässlich des Erodierens in das Dielektrikum zu tauchen,
indem das Werkstück der Erodiermaschine (1) zugeführt und an der Werkstück-Spanneinrichtung des Arbeitstisches lösbar festgelegt wird, wonach der das Dielektrikum aufnehmende Behälter und der Arbeitstisch mit dem Werkstück relativ zueinander verlagert werden, um das Werkstück in das Dielektrikum zu tauchen, wonach das Werkstück mittels einer an der Spanneinrichtung (8) der Pinole (6) gespannten Erodierelektrode erodiert wird, wonach der das Dielektrikum aufnehmende Behälter und der Arbeitstisch entgegengesetzt relativ zueinander verlagert werden, um das Werkstück dem Dielektrikum zu entnehmen, und die Erodierelektrode von der Spanneinrichtung (8) der Pinole (6) entnommen und abgeführt wird,
wonach der Erodiermaschine (1) die Pumpe (15) zugeführt und die Abtriebswelle (18; 18a) des Förderelementes der Pumpe (15) drehfest mit der Pinole (6) verbunden wird, während das die Abtriebswelle (18; 18a) lagernde Pumpengehäuse (16) drehfest an dem Träger (9) der Pinole (6) arretiert wird, wonach die Pinole (6) in Rotation versetzt wird, um das hiermit über die Abtriebswelle (18; 18a) gekoppelte Förderelement der Pumpe (15) anzutreiben und in der wenigstens einen Vertiefung des Werkstückes zurückgebliebenes Dielektrikum mittels der Pumpe (15) abzuführen.

3. Verfahren nach Anspruch 1 oder 2, **dadurch gekennzeichnet, dass** zur lösbaren Befestigung der Pumpe (15) an der Werkzeugmaschine eine drehfest mit der Abtriebswelle (18; 18a) der Pumpe (15) verbundene Spanneinrichtung (26) an der hierzu komplementären Spanneinrichtung (8) der Pinole (6) der Werkzeugmaschine lösbar festgelegt wird.

4. Verfahren nach einem der Ansprüche 1 bis 3, **dadurch gekennzeichnet, dass** ein Ablauf (22) der Pumpe (15) an eine an dem Träger (9) der Pinole (6) der Werkzeugmaschine mündende Abführleitung (23) angeschlossen und die Arbeitsflüssigkeit über die Abführleitung (23) abgeführt wird.

5. Verfahren nach Anspruch 4, **dadurch gekennzeichnet, dass** die über die Abführleitung (23) abgeführte Arbeitsflüssigkeit mittels eines der Werkzeugmaschine zugeordneten Filters gefiltert und insbesondere in einen Behälter rezirkuliert wird.

6. Verfahren nach Anspruch 4 oder 5, **dadurch gekennzeichnet, dass** die an dem Träger (9) der Pinole (6) der Werkzeugmaschine mündende Abführleitung (23) unter radialem Abstand in Bezug auf die Pinolenachse und der Ablauf (22) der Pumpe (15) unter einem entsprechenden radialen Abstand von der Abtriebswelle (18; 18a) ihres Förderelementes angeordnet ist, wobei das Pumpengehäuse (16) beim Anschließen seines Ablaufes (22) an die Abführleitung (23) der Werkzeugmaschine zugleich drehfest an dem Träger (9) arretiert wird.

7. Verfahren nach einem der Ansprüche 1 bis 6, **dadurch gekennzeichnet, dass** an einen Zulauf (19) der Pumpe (15) eine Gelenkleitung angeschlossen wird, deren Erstreckungsverlauf und deren Länge derart an die jeweilige Werkstückgeometrie angepasst wird, dass das freie Ende der Gelenkleitung anlässlich des Abführens von in der wenigstens einen Vertiefung des Werkstückes zurückgebliebener Arbeitsflüssigkeit mittels der an der Werkzeugmaschine (1) festgelegten Pumpe (15) bis in den Bereich des Bodens der wenigstens einen Vertiefung des Werkstückes reicht.

8. Verfahren nach einem der Ansprüche 1 bis 7, **dadurch gekennzeichnet, dass** das Werkstück in automatisierter Weise bearbeitet und von in dessen wenigstens einen Vertiefung zurückgebliebener Arbeitsflüssigkeit befreit wird, indem sowohl das Werkstück als auch die Pumpe (15) mittels eines gesteuert angetriebenen Manipulators der Werkzeugmaschine zu- und abgeführt und an der Werkstück-Spanneinrichtung der Werkzeugmaschine bzw. an deren Spanneinrichtung (8) lösbar festgelegt und hiervon gelöst wird.

9. Bearbeitungsvorrichtung, welche insbesondere zur Durchführung eines Verfahrens nach einem Ansprüche 1 bis 8 geeignet ist, umfassend wenigstens eine Werkzeugmaschine mit
- einer an einem Träger (9) gelagerten, gesteuert drehangetriebenen Pinole (6) mit einer Spanneinrichtung (8), welche zum lösbaren Festlegen wenigstens eines Werkzeugs an der Pinole (6) ausgebildet ist;
- einem unterhalb der Pinole (6) angeordneten Arbeitstisch mit einer Werkstück-Spanneinrichtung zum lösbaren Festlegen eines zu bearbeitenden Werkstückes; und
- einer Einrichtung zum zumindest teilweisen Benetzen des Werkstückes mit einem flüssigen Arbeitsmedium,
**dadurch gekennzeichnet, dass** die Bearbeitungsvorrichtung ferner eine Pumpe (15) mit einer in einem Pumpengehäuse (16) gelagerten Abtriebswelle (18; 18a) eines Förderelementes umfasst, wobei die Abtriebswelle (18; 18a) des Förderelementes der Pumpe (15) drehfest mit der Pinole (6) der Werkzeugmaschine verbindbar und das Pumpengehäuse (16) drehfest an dem Träger (9) der Pinole (6) der Werkzeugmaschine arretierbar ist, um das mit der Pinole (6) der Werkzeugmaschine über die Abtriebswelle (18; 18a) gekoppelte Förderelement der Pumpe (15) anzutreiben.

10. Bearbeitungsvorrichtung nach Anspruch 9, **dadurch gekennzeichnet, dass** es sich bei der Werkzeugmaschine um eine Erodiermaschine (1) handelt mit
- einer an einem Träger (9) gelagerten, gesteuert drehangetriebenen Pinole (6) mit einer Spanneinrichtung (8), welche zum lösbaren Festlegen wenigstens eines Werkzeugs in Form einer Erodierelektrode an der Pinole (6) ausgebildet ist;
- einem unterhalb der Pinole (6) angeordneten Arbeitstisch mit einer Werkstück-Spanneinrichtung zum lösbaren Festlegen eines zu bearbeitenden Werkstückes; und
- einer Einrichtung zum zumindest teilweisen Benetzen des Werkstückes mit einem flüssigen Arbeitsmedium in Form eines dem Arbeitstisch zugeordneten Behälters zur Aufnahme des Arbeitsmediums in Form eines flüssigen Dielektrikums, wobei der Behälter relativ zu dem Arbeitstisch verlagerbar ist, um ein an der Werkstück-Spanneinrichtung festgelegtes Werkstück anlässlich des Erodierens in das Dielektrikum zu tauchen, wobei die Bearbeitungsvorrichtung ferner die Pumpe (15) mit der in einem Pumpengehäuse (16) gelagerten Abtriebswelle (18; 18a) des Förderelementes umfasst, wobei die Abtriebswelle (18; 18a) des Förderelementes der Pumpe (15) drehfest mit der Pinole (6) der Erodiermaschine (1) verbindbar und das Pumpengehäuse (16) drehfest an dem Träger (9) der Pinole (6) der Erodiermaschine (1) arretierbar ist, um das mit der Pinole (6) der Erodiermaschine (1) über die Abtriebswelle (18; 18a) gekoppelte Förderelement der Pumpe (15) anzutreiben.

11. Bearbeitungsvorrichtung nach Anspruch 9 oder 10, **dadurch gekennzeichnet, dass** die Pumpe (15) zur lösbaren Befestigung an der Werkzeugmaschine eine drehfest mit ihrer Abtriebswelle (18; 18a) verbundene Spanneinrichtung (26) aufweist, welche zu der Spanneinrichtung (8) der Pinole (6) der Werkzeugmaschine komplementär ist.

12. Bearbeitungsvorrichtung nach einem der Ansprüche 9 bis 11, **dadurch gekennzeichnet, dass** die Pumpe (15) einen Ablauf (22) aufweist, welcher an eine an dem Träger (9) der Pinole (6) der Werkzeugmaschine mündende Abführleitung (23) anschließbar ist.

13. Bearbeitungsvorrichtung nach Anspruch 12, **dadurch gekennzeichnet, dass** der Werkzeugmaschine ein Filter zugeordnet ist, in welches die Abführleitung (23) mündet, wobei sich an das Filter insbesondere eine in einen Behälter mündende Rezirkulationsleitung anschließt.

14. Bearbeitungsvorrichtung nach einem der Ansprüche 9 bis 13, **dadurch gekennzeichnet, dass** die an dem Träger (9) der Pinole (6) der Werkzeugmaschine mündende Abführleitung (23) unter radialem Abstand in Bezug auf die Pinole (6) und der Ablauf (22) der Pumpe (15) unter einem entsprechenden radialen Abstand von der Abtriebswelle (18; 18a) ihres Förderelementes angeordnet ist, wobei der Ablauf (22) des Pumpengehäuses (16) und die Mündung der Abführleitung (23) formschlüssig aneinander arretierbar sind, um das Pumpengehäuse (16) drehfest an dem Träger (9) zu arretieren.

15. Bearbeitungsvorrichtung nach einem der Ansprüche 9 bis 14, **dadurch gekennzeichnet, dass** die Pumpe (15) nach Art einer Kreiselpumpe ausgebildet ist und das Förderelement der Pumpe (15) ein in dem Pumpengehäuse (16) gelagertes Pumpenrad aufweist, welches insbesondere über ein Getriebe (25), z.B. ein Planetengetriebe, mit der Abtriebswelle (18; 18a) in Verbindung steht.

16. Pumpe (15) einer Bearbeitungsvorrichtung gemäß dem Oberbegriff des Anspruchs 9, welche eine in einem Pumpengehäuse (16) gelagerte Abtriebswelle (18; 18a) eines Förderelementes umfasst, wobei die Abtriebswelle (18; 18a) des Förderelementes der Pumpe (15) drehfest mit der Pinole (6) der Werkzeugmaschine verbindbar und das Pumpengehäuse (16) drehfest an dem Träger (9) der Pinole (6) der Werkzeugmaschine arretierbar ist, um das mit der Pinole (6) der Werkzeugmaschine über die Abtriebswelle (18; 18a) gekoppelte Förderelement der Pumpe (15) anzutreiben, wobei die Pumpe (15) insbesondere antriebslos ist.
